# EUROPÄISCHE PATENTSCHRIFT

(11) **EP 3 710 288 B1**
(45) Veröffentlichungstag und Bekanntmachung des Hinweises auf die Patenterteilung: **05.04.2023**
(21) Anmeldenummer: 18803622.2
(22) Anmeldetag: 12.11.2018
(51) Int. Cl.: B60D 1/36, B60D 1/62, B60R 1/00

(54) **VERFAHREN UND ANHÄNGERANKUPPELASSISTENT ZUM UNTERSTÜTZEN EINES ANKUPPELVORGANGS EINES RÜCKWÄRTS AN EINEN ANHÄNGER HERANFAHRENDEN KRAFTFAHRZEUGS**
METHOD AND TRAILER-COUPLING ASSISTANCE FOR ASSISTING IN THE COUPLING PROCESS OF A MOTOR VEHICLE REVERSING TOWARDS A TRAILER
PROCÉDÉ ET ASSISTANT DE COUPLAGE DE REMORQUE POUR LE SUPPORT D'UN PROCÉDÉ DE COUPLAGE D'UN VÉHICULE À MOTEUR S'APPROCHANT EN MARCHE ARRIÈRE D'UNE REMORQUE

(30) Priorität: 16.11.2017 DE 102017220459
(43) Veröffentlichungstag der Anmeldung: 23.09.2020
(73) Patentinhaber: Volkswagen Aktiengesellschaft, 38440 Wolfsburg (DE)
(72) Erfinder: HÜGER, Philipp, 38471 Rühen (DE); FUHS, Johannes, 63853 Mömlingen (DE)
(86) Internationale Anmeldenummer: PCT/EP2018/080967
(87) Internationale Veröffentlichungsnummer: WO 2019/096746

(56) Entgegenhaltungen:
- WO-A1-2012/103193
- DE-A1-102012 001 380
- DE-A1-102016 122 916
- GB-A- 2 513 393
- US-A1- 2009 236 825

## Beschreibung

Die Erfindung betrifft ein Verfahren und einen Anhängerankuppelassistenten zum Unterstützen eines Ankuppelvorgangs eines rückwärts an einen Anhänger heranfahrenden Kraftfahrzeugs.

Zum Ankuppeln eines Anhängers ist es notwendig, zielgerichtet mit einem Kraftfahrzeug zur Deichsel des Anhängers zu fahren. Bei leichten Anhängern reicht es aus, dass man grob in die Nähe der Deichsel fährt und dann den Anhänger zum Kraftfahrzeug schiebt, bis die Deichsel des Anhängers, genauer die so genannte Kugelkopfkupplung des Anhängers über einem so genannten Kugelkopf des Kraftfahrzeugs angeordnet ist, um dann den Anhänger anzukoppeln. Bei schwereren Anhängern ist eine solche Vorgehensweise nicht möglich. Das heißt, das Kraftfahrzeug muss zielgerichtet rückwärts an den Anhänger herangefahren werden, bis sich die Kugelkopfkupplung des Anhängers exakt über dem Kugelkopf des Kraftfahrzeugs befindet.

Wesentlich hierbei ist die Bestimmung einer Einrastposition für den Kugelkopf des Kraftfahrzeugs, also einer entsprechenden Zielposition. Hieran werden hohe Anforderungen an die Genauigkeit gestellt. Der Kugelkopf der fahrzeugseitigen Anhängerkupplung hat üblicherweise einen Durchmesser von 5 Zentimetern. Das heißt, am Ende eines Rangiervorgangs muss die betreffende Anhängerdeichsel mindestens mit 2,5 Zentimeter Abstand zur fahrzeugseitigen Anhängerkupplung stehen, damit beim Herunterkurbeln der Anhängerdeichsel diese mit ihrer Kugelkopfkupplung direkt am Kugelkopf der Anhängerkupplung des Kraftfahrzeugs einrasten kann. Hierbei reicht die reine Erkennung der Deichsel an sich nicht aus. Es muss auch direkt die richtige Stelle der Anhängerdeichsel gefunden werden, an der der Kugelkopf der Anhängerkupplung des Kraftfahrzeugs einrasten kann.

Verfahren zur Unterstützung eines Fahrers eines Kraftfahrzeugs bei einer Rückwärtsfahrt zum Ankuppeln eines Anhängers sind an sich schon bekannt. So zeigt beispielsweise die DE 10 2014 212 041 A1 ein derartiges Verfahren. Dabei ist es vorgesehen, ein Kamerabild einer Rückfahrkamera anzuzeigen, wobei in Abhängigkeit von einem Lenkwinkel des Kraftfahrzeugs eine zugehörige Trajektorie so eingeblendet wird, dass ein Fahrer des Kraftfahrzeugs erkennen kann, ob jeweilige fahrzeugseitige und anhängerseitige Kupplungskomponenten nach der Rückwärtsfahrt übereinander zum Liegen kommen oder nicht.

Die DE 10 2010 004 920 A1 beschreibt ein Verfahren zur Unterstützung eines Ankuppelvorgangs eines Anhängers an einer fahrzeugseitigen Anhängerkupplung eines Kraftfahrzeugs. Dabei ist es vorgesehen, eine Relativposition der Anhängerkupplung des Anhängers zur fahrzeugseitigen Anhängerkupplung des Kraftfahrzeugs durch Triangulation aus von mindestens zwei Abstandsmessgeräten gemessenen Abständen der Anhängerkupplung des Anhängers zu ermitteln.

Die DE 10 2016 122 916 A1 zeigt ebenfalls ein Verfahren zur Unterstützung eines Ankuppelvorgangs eines Kraftfahrzeugs an einem Anhänger. Mittels einer Kamera wird dabei eine Position einer Anhängerkupplung des Anhängers im freien Raum in Bezug zu einem Kugelkopf einer fahrzeugseitigen Anhängerkupplung bestimmt. In diesem Zusammenhang ist es vorgesehen, mittels einer Positioniervorrichtung, bei welcher es sich um eine Lichtbarke zum Aussenden von Lichtsignalen oder um einen Schallwellensender zum Aussenden von Schallwellen handelt, für die Kamera erfassbare Positionssignale auszugeben.

Die GB 2 513 393 A betrifft ein Verfahren zum Unterstützen eines Ankuppelvorgangs eines rückwärts an einen Anhänger heranfahrenden Kraftfahrzeugs. Dabei werden zwei unterschiedliche Bereiche der Bildverarbeitung in Abhängigkeit der Distanz zwischen Fahrzeug und Anhänger verwendet. Ein erster Merkmalssatz kann ein oder mehrere an den Anhänger montierte Ziele betreffen. Ein zweiter Merkmalssatz ist definiert durch eine Konfiguration des Anhängerrahmens, der an der Vorderseite des Anhängers angeordnet ist. Dazu ist ein Bildverarbeitungsmodul ausgelegt, die Position und Orientierung des A-Rahmens zu identifizieren, an der die Anhängerkupplung montiert ist.

Die DE 10 2016 122 916 A1 betrifft ein geführtes Anhängerkupplungssteuerungssystem. Eine bildliche Erfassung einer Komponente wie zum Beispiel der Anhängerkupplung und der Kupplungskugel erfolgt mit einem Vorwissen der physikalischen Größe und relativen Positionierung des abgebildeten Ziels sowie der Messung der linearen Abstände zwischen den wichtigen Positionen auf dem erfassten Bild. Ein Prozessor kann einen linearen Abstand mit einem kalibrierten Pixelabstand zwischen identifizierten Kanten der dynamischen Pixelbilder messen.

Die DE 10 2012 001 380 A1 betrifft ein Assistenzverfahren und ein Fahrerassistenzsystem für ein Ankuppelmanöver eines Kraftfahrzeugs. Dabei wird eine Bildauswerteeinheit zur Erkennung einer Kupplungspfanne verwendet.

Die WO 2012/103193 A1 betrifft ein Rückblicksystem für ein Fahrzeug, das eine nach hinten gerichtete Kamera umfasst, die an einem hinteren Teil eines mit dem Rückblicksystem ausgestatteten Fahrzeugs angeordnet ist. Die nach hinten gerichtete Kamera ist in der Lage, Bilder hinter dem derart ausgestatteten Fahrzeug zu erfassen. Wenn sich ein Anhänger in der Nähe und/oder an dem derart ausgestatteten Fahrzeug befindet, kann ein Prozessor die aufgenommenen Bilder verarbeiten und zumindest teilweise als Reaktion auf diese Verarbeitung einen Anhängerwinkel des Anhängers relativ zu einer Längsachse des ausgerüsteten Fahrzeugs bestimmen. Ferner beschreibt die WO 2012/103193 A1 eine Detektion von Rändern. Nachdem die Ränder detektiert wurden, wird eine Hough-Transformation verwendet, um Kreise zu detektieren.

Die US 2009/0236825 A1 betrifft ein System zur Unterstützung der Ausrichtung eines am Heck eines Fahrzeugs montierten Kupplungsbolzens mit einer an der Vorderseite eines Anhängers montierten Kupplungsdose. Das System umfasst eine Kamera, die an dem Fahrzeug angebracht und so positioniert ist, dass sie ein Bild von der Rückseite des Fahrzeugs aufnimmt. Im Fahrzeug befindet sich ein Videodisplay, das das von der Kamera aufgenommene Bild anzeigt. Im Bild wird manuell eine Kupplungsdose gesucht und von einem Fadenkreuz ausgerichtet. Im Fahrzeug befindet sich auch ein Prozessor, der einen bevorzugten Fahrweg des Fahrzeugs berechnet, um den Kupplungsbolzen in Ausrichtung mit dem Kupplungssockel zu positionieren. Der Prozessor ist so programmiert, dass er dem Fahrer des Fahrzeugs Anweisungen für die erforderliche Lenkung gibt, um das Fahrzeug auf dem bevorzugten Fahrweg zu halten. Der Prozessor berechnet den bevorzugten Fahrweg immer dann neu, wenn das Fahrzeug um einen voreingestellten Schwellenwert vom bevorzugten Fahrweg abweicht.

Es ist die Aufgabe der vorliegenden Erfindung, eine Möglichkeit bereitzustellen, mittels welcher ein Ankuppelvorgang eines rückwärts an einen Anhänger heranfahrenden Kraftfahrzeugs besonders exakt erfolgen kann.

Diese Aufgabe wird durch ein Verfahren sowie durch einen Anhängerankupplungsassistenten zum Unterstützen eines Ankuppelvorgangs mit den Merkmalen der unabhängigen Patentansprüche gelöst. Vorteilhafte Ausgestaltungen mit zweckmäßigen und nicht-trivialen Weiterbildungen der Erfindung sind in den abhängigen Ansprüchen angegeben.

Bei dem erfindungsgemäßen Verfahren zum Unterstützen eines Ankuppelvorgangs eines rückwärts an einen Anhänger heranfahrenden Kraftfahrzeugs wird eine Kugelkopfkupplung des Anhängers anhand eines mittels einer Kamera des Kraftfahrzeugs aufgezeichneten Kamerabilds erfasst. Das Kamerabild wird danach auf einen Bildausschnitt eingegrenzt, in welchem sich die Kugelkopfkupplung befindet. Wenigstens eine gekrümmte Vorderkante der Kugelkopfkupplung wird innerhalb des eingegrenzten Bildausschnitts detektiert, wobei die Einrastposition für einen fahrzeugseitigen Kugelkopf anhand der wenigstens einen detektierten gekrümmten Vorderkante der Kugelkopfkupplung bestimmt wird.

Die wenigstens eine detektierte Vorderkante der anhängerseitigen Kugelkopfkupplung dient also mit anderen Worten als Referenzgeometrie bei der Bestimmung der Einrastposition für den fahrzeugseitigen Kugelkopf. Mittels der fahrzeugseitigen Kamera wird eine Deichsel und die daran angeordnete Kugelkopfkupplung automatisch erkannt, um basierend darauf automatisch die besagte Einrastposition für den fahrzeugseitigen Kugelkopf zu bestimmen. In einem ersten Schritt wird eine grobe Position des Anhängers und somit der Kugelkopfkupplung des Anhängers bestimmt. Dies erfolgt vorzugsweise basierend auf einer Eckenerkennung. Dies reicht aus, um mit dem Kraftfahrzeug rückwärts an den Anhänger heranzufahren und einen Abstand zwischen der Kugelkopfkupplung des Anhängers und dem fahrzeugseitigen Kugelkopf auf wenige Dezimeter zu verringern, jedoch noch nicht, um das Kraftfahrzeug so zu positionieren, dass ein Einrasten des Kugelkopfs der fahrzeugseitigen Anhängerkupplung zuverlässig erfolgen kann. Daher wird in einem weiteren Schritt die zuvor grob bestimmte Position der Kugelkopfkupplung des Anhängers verwendet, um den Bildausschnitt, in dem sich die Kugelkopfkupplung befindet, einzugrenzen. Mit anderen Worten erfolgt also die Eingrenzung des Kamerabilds auf den Bildausschnitt auf Basis der zuvor erfassten Kugelkopfkupplung des Anhängers.

In diesem Bildausschnitt werden nun mit Hilfe einer Bildverarbeitungsoperation, vorzugsweise mittels mehrerer Bildverarbeitungsoperationen, verschiedenste Kanten detektiert. Diese Kanten werden durch verschiedene Parameter gefiltert, um letztlich die wenigstens eine gekrümmte Vorderkante der Kugelkopfkupplung innerhalb des eingegrenzten Bildausschnitts zu detektieren. Beispielsweise werden hierzu ganz bestimmte geometrische Eigenschaften der gekrümmten Vorderkante, wie beispielsweise eine bestimmte Krümmung eines Kurvenverlaufs der gekrümmten Vorderkante sowie eine bestimmte Stetigkeit der Krümmung genutzt. Mit Hilfe der wenigstens einen detektierten gekrümmten Vorderkante der Kugelkopfkupplung des Anhängers wird sodann die exakte Einrastposition für den fahrzeugseitigen Kugelkopf bestimmt. Diese bestimmte Einrastposition für den fahrzeugseitigen Kugelkopf kann dann als exakte Zielposition für das Kraftfahrzeug verwendet werden. Beispielsweise ist es möglich, einen automatischen Rangiervorgang des Kraftfahrzeugs in Abhängigkeit von der bestimmten Einrastposition für den fahrzeugseitigen Kugelkopf durchzuführen. In dem Fall wäre es möglich, dass das Kraftfahrzeug teilautonom oder vollautonom rückwärts an den anzukuppelnden Anhänger heranfährt, bis der fahrzeugseitige Kugelkopf der fahrzeugseitigen Anhängerkupplung die bestimmte Einrastposition erreicht hat.

Es ist also erfindungsgemäß vorgesehen, einen Zusammenhang zwischen der wenigstens einen gekrümmten, also kurvenförmigen Vorderkante der Kugelkopfkupplung oder auch anderer Kanten in einem vorderen Bereich der Kugelkopfkupplung und der Einrastposition für den fahrzeugseitigen Kugelkopf herzustellen, um letztlich die exakte Einrastposition für den fahrzeugseitigen Kugelkopf zu bestimmen. Mittels des erfindungsgemäßen Verfahrens ist es auf besonders exakte Weise möglich, die besagte Einrastposition für den fahrzeugseitigen Kugelkopf zu bestimmen. Insbesondere schwere Anhänger, welche nicht manuell an das Kraftfahrzeug herangeschoben werden können, können mittels des erfindungsgemäßen Verfahrens besonders exakt angekuppelt werden. Denn in Kenntnis der bestimmten Einrastposition für den fahrzeugseitigen Kugelkopf ist es auf einfache Weise möglich, eine Zielposition für das Kraftfahrzeug beim Heranfahren an den anzuhängenden Anhänger vorzugeben.

Eine vorteilhafte Ausführungsform der Erfindung sieht vor, dass das Kamerabild erst auf den Bildausschnitt eingegrenzt wird, sobald ein vorgegebener Abstand zwischen der Kugelkopfkupplung und dem Kraftfahrzeug durch Heranbewegen des Kraftfahrzeugs unterschritten worden ist. Beispielsweise ist es möglich, diesen Abstand mit 10, 20 oder 30 Zentimetern vorzugeben. Grundsätzlich wird der Abstand so vorgegeben, dass eine gewisse Genauigkeit beim Detektieren der wenigstens einen gekrümmten Vorderkante der Kugelkopfkupplung möglich ist. Wenn das Kraftfahrzeug also rückwärts nah genug an die Kugelkopfkupplung herangefahren ist, erfolgt die Eingrenzung des Kamerabilds auf den Bildausschnitt. Denn je näher das Kraftfahrzeug rückwärts an den Anhänger heranfährt, desto mehr ergibt sich eine Draufsicht auf die Kugelkopfkupplung des Anhängers, aufgrund der üblicherweise vorgesehenen Positionierung der Kamera, bei welcher es sich vorzugsweise um eine Rückfahrkamera des Kraftfahrzeugs handelt. Dadurch, dass der Bildausschnitt erst dann eingegrenzt wird, sobald der vorgegebene Abstand zwischen der Kugelkopfkupplung und dem Kraftfahrzeug unterschritten worden ist, kann sichergestellt werden, dass die Perspektive des Kamerabilds zumindest im Wesentlichen einer Draufsicht auf die Kugelkopfkupplung des Anhängers gleicht. Dies ermöglicht eine besonders exakte Bestimmung der Einrastposition für den fahrzeugseitigen Kugelkopf.

Erfindungsgemäß ist vorgesehen, dass eine Krümmung der wenigstens einen Vorderkante ermittelt und die Einrastposition in Abhängigkeit von der ermittelten Krümmung bestimmt wird. Der Erfindung liegt dabei die Erkenntnis zugrunde, dass die Krümmung der wenigstens einen Vorderkante mit der Einrastposition für den fahrzeugseitigen Kugelkopf relativ zur Kugelkopfkupplung des Anhängers korreliert. Durch die Berücksichtigung der Krümmung der wenigstens einen Vorderkante bei der Bestimmung der Einrastposition kann diese besonders exakt ermittelt werden.

Erfindungsgemäß ist weiter vorgesehen, dass anhand der ermittelten Krümmung der wenigstens einen Vorderkante ein Mittelpunkt der Vorderkante bestimmt und dieser als die Einrastposition für den fahrzeugseitigen Kugelkopf festgelegt wird. Insbesondere wird der Mittelpunkt bezogen auf eine Querrichtung und Längsrichtung der Kugelkopfkupplung des Anhängers bestimmt, sodass sich die Einrastposition für den fahrzeugseitigen Kugelkopf zumindest im Wesentlichen mittig unter der vorzugsweise kugelschalenförmigen Kugelkopfkupplung des Anhängers befindet.

In weiterer vorteilhafter Ausgestaltung der Erfindung ist es vorgesehen, dass statische Bereiche des Kamerabilds, insbesondere eine Heckstoßstange des Kraftfahrzeugs, maskiert werden. Solche statischen Bereiche des Kamerabilds, beispielsweise in Form der Heckstoßstange des Kraftfahrzeugs, sind bei der Bestimmung der Einrastposition für den fahrzeugseitigen Kugelkopf nicht wichtig und können gegebenenfalls sogar störend sein. Daher ist es von Vorteil, wenn solche statischen Bereiche des Kamerabilds maskiert werden, sodass solche Bereiche die Bestimmung der Einrastposition für den fahrzeugseitigen Kugelkopf nicht beeinflussen beziehungsweise stören.

Eine weitere vorteilhafte Ausführungsform der Erfindung sieht vor, dass der Bildausschnitt in ein Graustufenbild umgewandelt wird, bevor die wenigstens eine Vorderkante detektiert wird. Dies ist insbesondere ein Vorteil im Hinblick auf verschiedenste Bildverarbeitungsalgorithmen zur Kantendetektion. Denn gewisse Bildverarbeitungsalgorithmen funktionieren erst oder zumindest besser, wenn das auszuwertende Bild nur in Graustufen vorliegt. Dadurch kann die Einrastposition für den fahrzeugseitigen Kugelkopf besonders exakt bestimmt werden.

In weiterer vorteilhafter Ausgestaltung der Erfindung ist es vorgesehen, dass die wenigstens eine Vorderkante mittels des Canny-Algorithmus detektiert wird. Der Canny-Algorithmus ist ein in der digitalen Bildverarbeitung weit verbreiteter, robuster Algorithmus zur Kantendetektion. Er gliedert sich in verschiedene Faltungsoperationen und liefert ein Bild, welches idealerweise nur noch die Kanten des Ausgangsbildes enthält. Mittels des Canny-Algorithmus kann die zumindest eine Vorderkante der Kugelkopfkupplung besonders zuverlässig detektiert werden. Infolgedessen kann unter Verwendung des Canny-Algorithmus auch die Einrastposition für den fahrzeugseitigen Kugelkopf besonders exakt bestimmt werden. Es sind jedoch auch andere Bildverarbeitungsalgorithmen zur Kantenerkennung möglich.

Erfindungsgemäß ist vorgesehen, dass zumindest eine weitere Vorderkante der Kugelkopfkupplung innerhalb des eingegrenzten Bildausschnitts detektiert und die Einrastposition für den fahrzeugseitigen Kugelkopf anhand der beiden detektierten Vorderkanten bestimmt wird. Dabei werden jeweilige Krümmungen der Vorderkanten ermittelt, anhand der ermittelten Krümmungen ein Gesamtmittelpunkt der Vorderkanten bestimmt und dieser Gesamtmittelpunkt als die Einrastposition für den fahrzeugseitigen Kugelkopf festgelegt. Es ist von Vorteil, mehrere Vorderkanten der Kugelkopfkupplung bei der Bestimmung der Einrastposition für den fahrzeugseitigen Kugelkopf zu berücksichtigen. Insbesondere wenn Krümmungen von mehreren Vorderkanten ermittelt und basierend darauf der besagte Gesamtmittelpunkt der Vorderkanten bestimmt sowie dieser Gesamtmittelpunkt als die Einrastposition für den fahrzeugseitigen Kugelkopf festgelegt wird, kann die Einrastposition für den fahrzeugseitigen Kugelkopf besonders exakt bestimmt werden. Beispielsweise können so aufgrund der Position der fahrzeugseitigen Kamera vorhandene perspektivische Verzerrungen beim Erfassen der Kugelkopfkupplung und letztlich der Vorderkanten der Kugelkopfkupplungen gegebenenfalls kompensiert werden, sodass die Einrastposition für den fahrzeugseitigen Kugelkopf besonders exakt bestimmt werden kann.

Der erfindungsgemäße Anhängerankuppelassistent für ein Kraftfahrzeug ist dazu eingerichtet, das erfindungsgemäße Verfahren und eine vorteilhafte Ausführungsform des erfindungsgemäßen Verfahrens durchzuführen. Vorteilhafte Ausgestaltungen des erfindungsgemäßen Verfahrens sind als vorteilhafte Ausgestaltungen des erfindungsgemäßen Anhängerankuppelassistenten und umgekehrt anzusehen, wobei der Anhängerankuppelassistent insbesondere Mittel zur Durchführung der Verfahrensschritte aufweist. Ferner kann der Anhängerankuppelassistent eine Bildverarbeitungseinrichtung aufweisen, welche dazu eingerichtet ist, die Verfahrensschritte durchzuführen. Der Anhängerankuppelassistent weist vorzugsweise eine Datenschnittstelle auf, um Bilddaten von der fahrzeugseitigen Kamera zu empfangen. Auch kann der Anhängerankuppelassistent beispielsweise als Nachrüstlösung ausgebildet sein, welche - entsprechende fahrzeugseitige Schnittstellen vorausgesetzt - einfach in beliebigen Kraftfahrzeugen nachgerüstet werden kann. Natürlich ist es auch möglich, dass der Anhängerankuppelassistent von vornerein bei der Produktion eines Kraftfahrzeugs vorgesehen wird.

Das erfindungsgemäße Kraftfahrzeug umfasst den erfindungsgemäßen Anhängerankuppelassistenten oder eine vorteilhafte Ausführungsform des erfindungsgemäßen Anhängerankuppelassistenten.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine Draufsicht auf einen Ankuppelvorgang eines rückwärts an einen Anhänger heranfahrenden Kraftfahrzeugs;
- Fig. 2: eine Seitenansicht des Kraftfahrzeugs, nachdem dieses an den Anhänger angekuppelt worden ist;
- Fig. 3: ein mittels einer Rückfahrkamera des Kraftfahrzeugs aufgezeichnetes Kamerabild während das Kraftfahrzeug rückwärts an den Anhänger heranfährt;
- Fig. 4: einen eingegrenzten Bildausschnitt des mittels der Rückfahrkamera aufgezeichneten Kamerabilds, in welchem eine Kugelkopfkupplung des Anhängers und ein fahrzeugseitiger Kugelkopf zu erkennen sind; und in
- Fig. 5: eine weitere Darstellung des eingegrenzten Bildausschnitts, wobei zwei detektierte Vorderkanten der Kugelkopfkupplung des Anhängers optisch hervorgehoben sind, die zur Bestimmung einer Einrastposition für den fahrzeugseitigen Kugelkopf dienen.

In den Figuren sind gleiche oder funktionsgleiche Elemente mit den gleichen Bezugszeichen versehen worden.

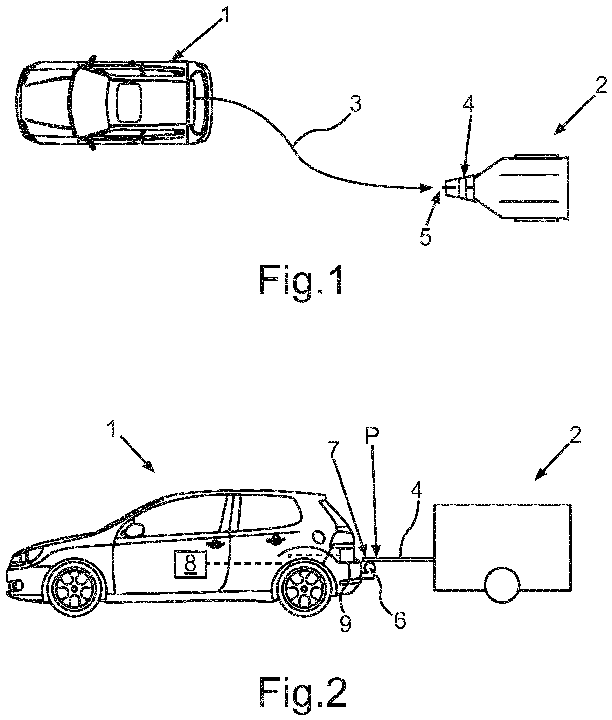

Ein Ankuppelvorgang eines rückwärtsfahrenden Kraftfahrzeugs 1 an einen Anhänger 2 ist in einer Draufsicht in Fig. 1 gezeigt. Das Kraftfahrzeug 1 fährt dabei eine schematisch angedeutete Trajektorie 3 ab, um sich einer Deichsel 4 des Anhängers 2 zu nähern, an deren Vorderseite eine Kugelkopfkupplung 5 angeordnet ist. Im vorliegend gezeigten Ausführungsbeispiel soll davon ausgegangen werden, dass der Anhänger 2 so schwer ist, dass dieser nicht ohne weiteres manuell, also von Hand, rangiert werden kann. Daher ist es erforderlich, dass das Kraftfahrzeug 1 ganz exakt an die Kugelkopfkupplung 5 des Anhängers 2 herangefahren wird, sodass die Deichsel 4 danach lediglich noch abgesenkt werden muss, um den Anhänger 2 an das Kraftfahrzeug 1 anzukuppeln.

In Fig. 2 ist das Kraftfahrzeug 1 nach dem Ankuppeln an den Anhänger 2 in einer Seitenansicht gezeigt. Ein fahrzeugseitiger Kugelkopf 6 ist dabei in einer Einrastposition P unterhalb der Deichsel 4 positioniert worden, sodass die Deichsel 4 mit ihrer vorliegend nicht dargestellten Kugelkopfkupplung 5 lediglich noch abgesenkt werden musste, damit der fahrzeugseitige Kugelkopf 6 in die Kugelkopfkupplung 5 des Anhängers 2 einrasten beziehungsweise einschnappen konnte. Eine Vorderkante 7 der hier nicht näher bezeichneten Kugelkopfkupplung 5 des Anhängers 2 ist zudem noch schematisch angedeutet.

Um die besagte Einrastposition P für den fahrzeugseitigen Kugelkopf 6 besonders exakt bestimmen zu können, weist das Kraftfahrzeug 1 einen Anhängerankuppelassistenten 8 auf, welcher dazu eingerichtet ist, die Einrastposition P für den fahrzeugseitigen Kugelkopf 6 zu bestimmen. Des Weiteren ist eine Rückfahrkamera 9 des Kraftfahrzeugs 1 schematisch angedeutet. Der Anhängerankuppelassistent 8 und die Rückfahrkamera 9 sind signaltechnisch miteinander verbunden, sodass der Anhängerankuppelassistent 8 Bildsignale von der Rückfahrkamera 9 empfangen und auswerten kann. Anhand der nachfolgenden Figuren wird ein Verfahren zum Unterstützen des Ankuppelvorgangs des Anhängers 2 an das Kraftfahrzeug 1 näher beschrieben.

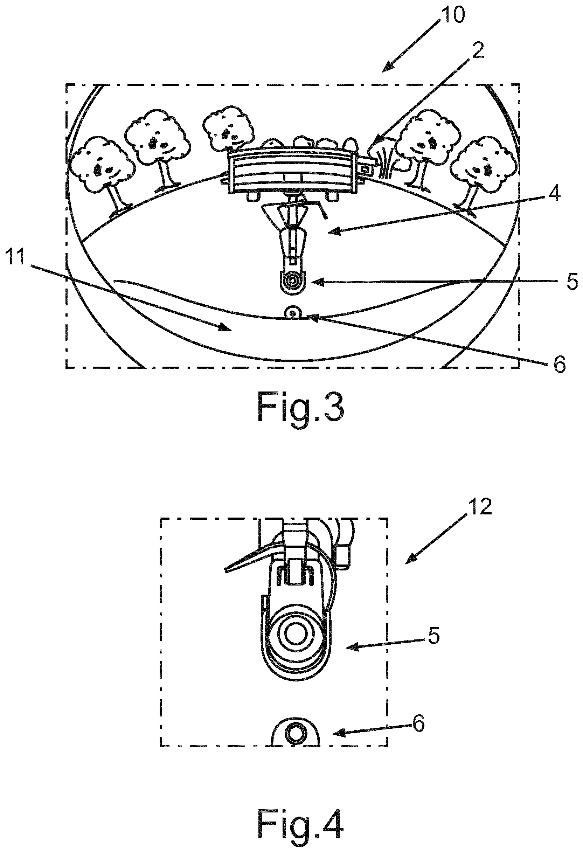

In Fig. 3 ist ein mittels der Rückfahrkamera 9 aufgezeichnetes Kamerabild 10 gezeigt. In dem Kamerabild 10 ist der rückseitig mit dem Kraftfahrzeug 1 angeordnete Anhänger 2 mitsamt seiner Deichsel 4 und der daran angeordneten Kugelkopfkupplung 5 zu erkennen. Ferner kann man noch den fahrzeugseitigen Kugelkopf 6 innerhalb des Kamerabilds 10 sowie eine Heckstoßstange 11 des Kraftfahrzeugs 1 sehen. Mittels des Anhängerankuppelassistenten 8 wird anhand des mittels der Rückfahrkamera 9 aufgezeichneten Kamerabilds 10 die Kugelkopfkupplung 5 des Anhängers 2 und insbesondere auch die Position der Kugelkopfkupplung 5 erfasst beziehungsweise ermittelt. Statische Bereiche des Kamerabilds 10, insbesondere die Heckstoßstange 11, werden anschließend maskiert. Denn die Heckstoßstange 11 oder auch andere Komponenten des Kraftfahrzeugs 1 sind bei der Ermittlung der Einrastposition P für den fahrzeugseitigen Kugelkopf 6 nicht weiter von Interesse und können sogar störend sein. Daher werden solche statischen Bereiche maskiert beziehungsweise anderweitig ausgeblendet.

In Fig. 4 ist ein Bildausschnitt 12 des Kamerabilds 10 gezeigt. Sobald das Kraftfahrzeug 1 einen vorgegebenen Abstand zu der erfassten Kugelkopfkupplung 5 unterschritten hat, wird das Kamerabild 10 auf den hier in Fig. 4 gezeigten Bildausschnitt 12 eingegrenzt. Dies kann beispielsweise dann erfolgen, wenn ein Abstand zwischen dem fahrzeugseitigen Kugelkopf 6 und der Kugelkopfkupplung 5, 10, 20 oder 30 Zentimeter unterschritten hat. Der Abstand, ab welchem das Kamerabild 10 auf den Bildausschnitt 12 eingegrenzt wird, kann beispielsweise in Abhängigkeit von der Positionierung der Rückfahrkamera 9 des Kraftfahrzeugs 1 festgelegt werden. Wichtig für die exakte Bestimmung der korrekten Einrastposition P des fahrzeugseitigen Kugelkopfs 6 ist dabei unter anderem, wie stark beziehungsweise wie sehr in dem Bildausschnitt 12 des Kamerabilds 10 die Kugelkopfkupplung 5 in einer Draufsicht erkennbar ist. Je näher nämlich das Kraftfahrzeug 1 rückwärts an den Anhänger 2 heranfährt, desto mehr verändert sich die Perspektive des Kamerabilds 10 zu einer Draufsicht auf die Kugelkopfkupplung 5.

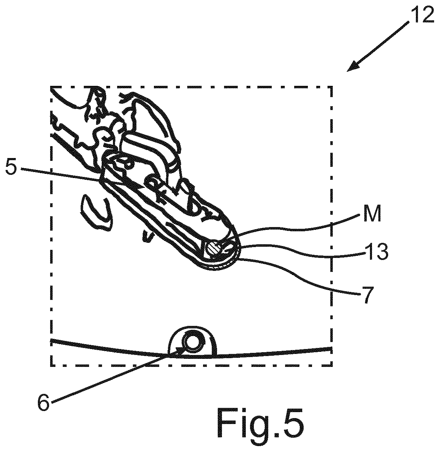

In Fig. 5 ist der Bildausschnitt 12 des Kamerabilds 10 in einer weiteren Darstellung gezeigt, wobei neben der bereits in Zusammenhang mit der Fig. 2 schematisch angedeuteten Vorderkante 7 noch eine weitere Vorderkante 13 der Kugelkopfkupplung optisch markiert beziehungsweise hervorgehoben worden sind. Der Anhängerankuppelassistent 8 detektiert diese gekrümmten Vorderkanten 7, 13 der Kugelkopfkupplung 5 des Anhängers 2 innerhalb des eingegrenzten Bildausschnitts 12. Um diese Vorderkanten 7, 13 besonders zuverlässig erkennen zu können, wird der Bildausschnitt 12 zunächst in ein Graustufenbild umgewandelt. Die Erkennung von Kanten innerhalb des Bildausschnitts 12 und insbesondere die Erkennung der Vorderkanten 7, 13 erfolgt vorzugsweise mittels des so genannten Canny-Algorithmus. Dieser setzt voraus, dass der Bildausschnitt 12 als Graustufenbild vorliegt. Der Canny-Algorithmus ist ein in der digitalen Bildverarbeitung weit verbreiteter, robuster Algorithmus zur Kantendetektion. Unter Verwendung dieses Algorithmus kann ein Bild geliefert werden, welches idealerweise nur noch Kanten des Ausgangsbildes, also des Bildausschnitts 12, enthält. Andere Bildverarbeitungsalgorithmen zur Kantendetektion sind aber ebenfalls möglich.

Vorzugsweise werden mehrere Bildverarbeitungsoperationen verwendet, um verschiedene Kanten innerhalb des Bildausschnitts 12 zu detektieren. Die Gesamtheit dieser Kanten wird durch verschiedene Parameter gefiltert, um letztlich die beiden hier optisch hervorgehobenen Vorderkanten 7, 13 zu detektieren. Dabei können beispielsweise Informationen hinsichtlich bestimmter geometrischer Merkmale der Vorderkanten 7, 13, wie z.B. bestimmte Krümmungen und auch ihre Stetigkeiten, genutzt werden, um die Vorderkanten 7, 13 von anderen Kanten im Bildausschnitt 12 zu unterscheiden.

Innerhalb des Bildausschnitts 12 werden jeweilige Krümmungen der Vorderkanten 7, 13 ermittelt. Anhand der ermittelten Krümmungen wird ein Gesamtmittelpunkt M der Vorderkanten 7, 13 bestimmt. Dieser Gesamtmittelpunkt M wird dann als die Einrastposition P für den fahrzeugseitigen Kugelkopf 6 festgelegt.

Dafür werden beispielsweise jeweilige, hier nicht näher bezeichnete Mittelpunkte der kurvenförmigen Vorderkanten 7, 13 bestimmt. Zudem kann beispielsweise auch eine Ausrichtung des Anhängers 2 zum Kraftfahrzeug 1, insbesondere zur Rückfahrkamera 9, berücksichtigt werden, um den Gesamtmittelpunkt M und somit letztlich die Einrastposition P zu bestimmen. Denn die Rückfahrkamera 9 wird in den seltensten Fällen eine reine Draufsicht auf die Kugelkopfkupplung 5 des Anhängers 2 liefern. Unter Berücksichtigung der Kameraperspektive der Rückfahrkamera 9 kann unter Zuhilfenahme der erkannten Vorderkanten 7, 13 der Gesamtmittelpunkt M bestimmt werden, welcher dann zumindest im Wesentlichen dem Gesamtmittelpunkt der kugelförmig gekrümmten Unterseite der Kugelkopfkupplung 5 des Anhängers 2 entspricht.

In Kenntnis der so bestimmten Einrastposition P kann dann eine Zielposition für das Kraftfahrzeug 1 vorgegeben werden. Beispielsweise ist es denkbar, dass der Anhängerankuppelassistent 8 dazu ausgelegt ist, das Kraftfahrzeug 1 teilautonom oder vollautonom rückwärts an den Anhänger 2 heranzufahren, und zwar bis der fahrzeugseitige Kugelkopf 6 in der bestimmten Einrastposition P unterhalb von der Kugelkopfkupplung 5 des Anhängers 2 positioniert worden ist. Anschließend muss die Deichsel 4 lediglich noch nach unten bewegt werden, bis der Kugelkopf 6 des Kraftfahrzeugs 1 in die Kugelkopfkupplung 5 des Anhängers 2 eingerastet ist.

Mit Hilfe des beschriebenen Verfahrens und des beschriebenen Anhängerankuppelassistenten 8 kann also ein Ankuppelvorgang des Kraftfahrzeugs 1 an den Anhänger 2 beim rückwärts Heranfahren des Kraftfahrzeugs 1 an den Anhänger 2 besonders exakt unterstützt werden. Die Erfindung beschränkt sich dabei nicht rein auf die Verwendung des Gesamtmittelpunkts M der Vorderkanten 7, 13, sondern beinhaltet allgemein die Verwendung einer oder auch mehrerer Vorderkanten 7, 13 in einem vorderen Bereich der Kugelkopfkupplung 5 des Anhängers 2 als Referenz zur Bestimmung der genauen Einrastposition P für den Kugelkopf 6 des Kraftfahrzeugs 1.

### Bezugszeichenliste

- 1: Kraftfahrzeug
- 2: Anhänger
- 3: Trajektorie
- 4: Anhängerdeichsel
- 5: Kugelkopfkupplung des Anhängers
- 6: Kugelkopf des Kraftfahrzeugs
- 7: Vorderkante der Kugelkopfkupplung
- 8: Anhängerankuppelassistent
- 9: Rückfahrkamera
- 10: Kamerabild der Rückfahrkamera
- 11: Heckstoßstange des Kraftfahrzeugs
- 12: Bildausschnitt des Kamerabilds der Rückfahrkamera
- 13: Vorderkante der Kugelkopfkupplung
- M: Gesamtmittelpunkt
- P: Einrastposition für den Kugelkopf des Kraftfahrzeugs

## Patentansprüche

1. Verfahren zum Unterstützen eines Ankuppelvorgangs eines rückwärts an einen Anhänger (2) heranfahrenden Kraftfahrzeugs (1), mit den Schritten:
- Erfassen einer Kugelkopfkupplung (5) des Anhängers (2) anhand eines mittels einer Kamera des Kraftfahrzeugs (1) aufgezeichneten Kamerabilds (10);
- Eingrenzen des Kamerabilds (10) auf einen Bildausschnitt (12), in welchem sich die Kugelkopfkupplung (5) befindet;
**gekennzeichnet durch** folgende weiteren Schritte:
- Detektieren wenigstens einer gekrümmten Vorderkante (7) der Kugelkopfkupplung (5) innerhalb des eingegrenzten Bildausschnitts (12), wobei zunächst mittels mindestens einer Bildverarbeitungsoperation Kanten detektiert werden und diese anschließend durch verschiedene Parameter gefiltert werden;
- Bestimmen der Einrastposition (P) für einen fahrzeugseitigen Kugelkopf (6) anhand der wenigstens einen detektierten gekrümmten Vorderkante (7, 13) der Kugelkopfkupplung (5), wobei eine Krümmung der wenigstens einen Vorderkante (7) ermittelt und die Einrastposition (P) in Abhängigkeit von der ermittelten Krümmung bestimmt wird, wobei anhand der ermittelten Krümmung der wenigstens einen Vorderkante (7) ein Mittelpunkt der Vorderkante (7, 13) bestimmt und dieser als die Einrastposition (P) für den fahrzeugseitigen Kugelkopf (6) festgelegt wird;
- wobei zumindest eine weitere Vorderkante (13) der Kugelkopfkupplung (5) innerhalb des eingegrenzten Bildausschnitts (12) detektiert und die Einrastposition (P) für den fahrzeugseitigen Kugelkopf (6) anhand der beiden detektierten Vorderkanten (7, 13) bestimmt wird, und
- wobei jeweilige Krümmungen der Vorderkanten (7, 13) ermittelt werden, anhand der ermittelten Krümmungen ein Gesamtmittelpunkt (M) der Vorderkanten (7, 13) bestimmt und dieser Gesamtmittelpunkt (M) als die Einrastposition (P) für den fahrzeugseitigen Kugelkopf (6) festgelegt wird.

2. Verfahren nach Anspruch 1,
**dadurch gekennzeichnet, dass**
das Kamerabild (10) erst auf den Bildausschnitt (12) eingegrenzt wird, sobald ein vorgegebener Abstand zwischen der Kugelkopfkupplung (5) und dem Kraftfahrzeug (1) durch Heranbewegen des Kraftfahrzeugs (1) unterschritten worden ist.

3. Verfahren nach einem der vorhergehenden Ansprüche,
**dadurch gekennzeichnet, dass**
statische Bereiche des Kamerabilds (10), insbesondere eine Heckstoßstange (11) des Kraftfahrzeugs (1), maskiert werden.

4. Verfahren nach einem der vorhergehenden Ansprüche,
**dadurch gekennzeichnet, dass**
der Bildausschnitt (12) in ein Graustufenbild umgewandelt wird, bevor die wenigstens eine Vorderkante (7) detektiert wird.

5. Verfahren nach Anspruch 4,
**dadurch gekennzeichnet, dass**
die wenigstens eine Vorderkante (7) mittels des Canny-Algorithmus detektiert wird.

6. Anhängerankuppelassistent (8) für ein Kraftfahrzeug (1), umfassend Mittel zur Ausführung des Verfahrens nach einem der vorhergehenden Ansprüche.

7. Kraftfahrzeug (1) mit einem Anhängerankuppelassistenten (8) nach Anspruch 6.

## Claims

1. Method for assisting in a coupling process of a motor vehicle (1) reversing towards a trailer (2), comprising the steps:
- detecting a ball-shaped coupling (5) of the trailer (2) on the basis of a camera image (10) recorded by means of a camera of the motor vehicle (1);
- limiting the camera image (10) to an image extract (12) containing the ball-shaped coupling (5);
**characterized by** the following further steps:
- detecting at least one curved front edge (7) of the ball-shaped coupling (5) within the limited image extract (12), wherein edges are initially detected by means of at least one image processing operation and these edges are then filtered by various parameters;
- determining the engagement position (P) for a vehicle-side towball (6) on the basis of the at least one detected curved front edge (7, 13) of the ball-shaped coupling (5), wherein a curvature of the at least one front edge (7) is established and the engagement position (P) is determined depending on the established curvature, wherein by means of the established curvature of the at least one front edge (7), a centre point of the front edge (7, 13) is determined and this is defined as the engagement position (P) for the vehicle-side towball (6);
- wherein at least one further front edge (13) of the ball-shaped coupling (5) is detected inside the limited image extract (12), and the engagement position (P) for the vehicle-side towball (6) is determined on the basis of both detected front edges (7, 13); and
- wherein respective curvatures of the front edges (7, 13) are established, then by means of the established curvatures an overall centre point (M) of the front edges (7, 13) is determined, and this overall centre point (M) is defined as the engagement position (P) for the vehicle-side towball (6).

2. Method according to Claim 1,
**characterized in that**
the camera image (10) is only limited to the image extract (12) when a lower limit for a predefined distance between the ball-shaped coupling (5) and the motor vehicle (1) has been passed because of the approach of the motor vehicle (1).

3. Method according to either of the preceding claims,
**characterized in that**
static regions of the camera image (10), in particular a rear bumper (11) of the motor vehicle (1), are masked.

4. Method according to one of the preceding claims,
**characterized in that**
the image extract (12) is converted into a grayscale image before the at least one front edge (7) is detected.

5. Method according to Claim 4,
**characterized in that**
the at least one front edge (7) is detected by means of the Canny algorithm.

6. Trailer-coupling assistant (8) for a motor vehicle (1), comprising means for executing the method according to one of the preceding claims.

7. Motor vehicle (1) with a trailer-coupling assistant (8) according to Claim 6.

## Revendications

1. Procédé d'assistance d'un processus d'attelage d'un véhicule automobile (1) roulant en marche arrière sur une remorque (2), ledit procédé comprenant les étapes :
- détecter un attelage à rotule (5) de la remorque (2) à l'aide d'une image de caméra (10) capturée au moyen d'une caméra du véhicule automobile (1) ;
- limiter l'image de la caméra (10) à une portion d'image (12) dans laquelle se trouve l'attelage à rotule (5) ;
**caractérisé par** les étapes supplémentaires suivantes :
- détecter au moins un bord avant courbé (7) de l'attelage à rotule (5) à l'intérieur de la portion d'image limitée (12), des bords étant d'abord détectés au moyen d'au moins une opération de traitement d'image et lesdits bords étant ensuite filtrés par différents paramètres ;
- déterminer la position d'encliquetage (P) d'une rotule côté véhicule (6) sur la base de l'au moins un bord avant courbé détecté (7, 13) de l'attelage à rotule (5), une courbure de l'au moins un bord avant (7) étant déterminée et la position d'encliquetage (P) étant déterminée en fonction de la courbure déterminée, un point central du bord avant (7, 13) étant déterminé sur la base de la courbure déterminée de l'au moins un bord avant (7) et ledit point central étant défini comme la position d'encliquetage (P) de la rotule côté véhicule (6) ;
- au moins un autre bord avant (13) de l'attelage à rotule (5) étant détecté à l'intérieur de la portion d'image limitée (12) et la position d'encliquetage (P) de la rotule côté véhicule (6) étant déterminée sur la base des deux bords avant détectés (7, 13), et
- les courbures respectives des bords avant (7, 13) étant déterminées, un centre global (M) des bords avant (7, 13) étant déterminé à partir des courbures déterminées et ledit centre global (M) étant défini comme la position d'encliquetage (P) de la rotule côté véhicule (6) .

2. Procédé selon la revendication 1,
**caractérisé en ce que**
l'image de caméra (10) est limitée à la portion d'image (12) seulement dès qu'une distance minimale spécifiée entre l'attelage à rotule (5) et le véhicule automobile (1) a été franchie par le véhicule automobile en approche (1).

3. Procédé selon l'une des revendications précédentes,
**caractérisé en ce que**
des zones statiques de l'image de caméra (10), notamment un pare-chocs arrière (11) du véhicule automobile (1), sont masquées.

4. Procédé selon l'une des revendications précédentes,
**caractérisé en ce que**
la portion d'image (12) est convertie en une image à niveaux de gris avant que l'au moins un bord avant (7) ne soit détecté.

5. Procédé selon la revendication 4,
**caractérisé en ce que**
l'au moins un bord avant (7) est détecté à l'aide de l'algorithme de Canny.

6. Assistant d'attelage de remorque (8) destiné à un véhicule automobile (1), ledit assistant comprenant des moyens pour mettre en œuvre le procédé selon l'une des revendications précédentes.

7. Véhicule automobile (1) comprenant un assistant d'attelage de remorque (8) selon la revendication 6.
